# EUROPÄISCHE PATENTSCHRIFT

(11) **EP 2 392 630 B1**
(45) Veröffentlichungstag und Bekanntmachung des Hinweises auf die Patenterteilung: **02.12.2015**
(21) Anmeldenummer: 11004049.0
(22) Anmeldetag: 16.05.2011
(51) Int. Cl.: E02B 15/10, D04H 1/42, D04H 1/70, D01D 5/098, D01F 6/04, C09K 3/32, E02B 15/04

(54) **SPRÜHPRODUKTE AUS WACHSEN IN FORM EINER FASRIG VERFILZTEN WACHSWOLLE, DEREN HERSTELLUNG SOWIE DEREN ANWENDUNG ALS ÖL- UND CHEMIKALIENBINDERMITTEL, ALS ADSORPTIONSMITTEL FÜR ÖLE, ÖLABFÄLLE UND ANDERE HYDROPHOBE FLÜSSIGKEITEN ZUR REINIGUNG VON WASSER, FLÜSSEN, SEEN UND MEEREN, SAND ODER ERDE**
SPRAY PRODUCTS FROM POLYMERS (HYDROCARBONS) IN THE FORM OF A FIBROUSLY MATTED POLYMER WOOL, PRODUCTION AS WELL AS THEIR USE AS AN OIL BINDING AGENT AND CHEMICAL BINDING AGENT, AS ADSORPTION PRODUCTS FOR OILS, OIL RUBBISH AND OTHER HYDROPHOBIC LIQUIDS TO THE CLEANING OF WATER, RIVERS, LAKES AND SEAS, SAND OR EARTH
PRODUITS DE CIRES, TRAITÉS DANS UN PROCESSUS DE PULVÉRISATION, EN FORME D'UNE TOISON DE CIRE FIBREUSEMENT EMBROUSSAILLÉES, LEUR PRODUCTION AUSSI BIEN QUE LEUR APPLICATION COMME LIANT POUR LES PÉTROLES ET DES PRODUITS CHIMIQUES, COMME MOYEN ADSORBANT POUR LES PÉTROLES, LE REBUT PÉTROLIER ET D'AUTRES LIQUIDES HYDROPHOBIQUES, AINSI QUE POUR LA DÉCONTAMINATION DE L'EAU, DES RIVIÈRES, DES LACS ET DES MERS, DU SABLE ET DU SOL

(30) Priorität: 02.06.2010 DE 102010022437
(43) Veröffentlichungstag der Anmeldung: 07.12.2011
(73) Patentinhaber: Wachs-Chemie Elsteraue e.K., 80638 München (DE)
(72) Erfinder: Hufschmid, Günther, 82237 Wörthsee (DE)

(56) Entgegenhaltungen:
- EP-A1- 0 864 682
- EP-A1- 0 890 664
- DE-A1- 4 308 959
- US-A- 4 737 394
- US-B1- 6 230 901

## Beschreibung

Gegenstand der Erfindung ist die Verwendung von Sprühprodukten aus Wachsen in Form einer faserig verfilzten Wachswolle und deren Anwendung als Öl-und Chemikalienbindemittel, als Adsorptionsmittel für Öle und andere hydrophobe Flüssigkeiten in Wasser, Seen, Flüssen und Meeren, Sand, Schlamm oder Erde.

### Stand der Technik

Es ist bekannt, dass es Ölbindemittel auf Granulatbasis, die im allgemeinen eine Partikelgröße über 100 Mikrometer haben, mit den Grundmaterialien Moler/Diatomeenerde, Calciumsilikat, Magnesiumaluminiumsilikat, Glaswolle, Calciumsilikathydrat, kalzinierende Tonerde, Moos, Sepiolith, Bimsstein, Calciumsulfat und Porenbeton, Cellulose und Baumwolle, granulierter Gips, Torf, zerkleinertes Holz, Attapulgit, Alkylstyrolpolymer, Acetylsäure/-salz bzw. amorphe Kieselsäure sowie Wirbelschichtbraunkohle gibt. Auch auf der Basis von Gummi, Polyurethan, Polypropylen, Polypropylenabfällen, Polyethylen und Polyethylenabfällen oder Kokosfasern sind Granulate bekannt.

Es ist auch bekannt, dass es Ölbindemittel auf Pulverbasis, die im allgemeinen eine Partikelgröße über 100 Mikrometer haben, mit den Grundmaterialien gemahlene Kiefernborke, Polyurethan, Tonschiefer sowie Perlit gibt.

Diese Ölbindemittel auf Granulat- und Pulverbasis werden zu Rollen, Schläuchen, Kissen, Vliesen oder zu Tüchern verarbeitet auf dem Ölbindemittelmarkt angeboten und in der Liste der geprüften Ölbindemittel vom "Verband der Hersteller geprüfter Öl- und Chemikalienbindemittel e. V." veröffentlicht.

Diese gelisteten Ölbindemittel auf Granulat- und Pulverbasis binden das aufzunehmende Öl an ihrer Oberfläche. Es bilden sich kleine ölgetränkte Inseln, die untereinander keinen Zusammenhalt haben. Letztendlich erhält man ein ölgetränktes Granulat oder Pulver, das nur durch eine Verpackung zusammengehalten wird.

In der Druckschrift DE 4320908 A1 wird ein Ölbindemittel aus Polyethylen oder aus PE-Abfällen in fein verteilter Form, z. B. in feinfaseriger Form, wobei die Fasern als Schabefasern spanförmig gedreht werden, vorgeschlagen.

In der Druckschrift DE 10 2006 029 972 A1 wird eine Vorrichtung zur Erzeugung eines Faservlieses im Melt-Blown-Verfahren beschrieben, indem durch Spinndüsen und eine Einrichtung zur Erzeugung von Druckluft Polymerfäden unter Ausbildung eines Vlieses entstehen.

In der Druckschrift 21 23 060 wird ein Ölbindemittel vorgeschlagen, das zu 92 bis 98 % aus wasserabweisendem Paraffin und der Rest aus Emulgiermittel besteht.

Bisher fehlt es an geeigneten Ölbindemitteln, die als Pulver oder Granulat auf eine Flüssigkeit, einen sandigen Strand oder auch auf die Erde ausgebracht und nach einer kurzen mechanischen Einarbeitung als vollgesogene Einheit wieder entfernt werden können und die Bestandteile komplett wiederverwendbar sind. Des Weiteren gibt es bisher keine Ölbindemittel, die auch im Eiswasser wirksam sind und neben Öl für alle hydrophoben Lösungsmittel geeignet sind. Auch gibt es bisher keine Ölbindemittel, die bei starkem Wellengang auf Seen oder Meeren zur Ölbindung verwendet werden können.

Bisher fehlt es an geeigneten Herstellverfahren für Ölbindemittel, die als Sprühprodukte aus Wachsen in Form einer faserig verfilzten Wachswolle hergestellt werden und als zusammenhängende Ware, wie z. B. eine verfilzte Wolle oder eine Watte, auf eine Flüssigkeit, einen sandigen Strand, Schlamm oder auch auf die Erde ausgebracht und nach einer kurzen mechanischen Einarbeitung als mit dem Umweltgift vollgesogene Einheit wieder komplett entfernt werden können.

### Aufgabenstellung

Gegenstand der vorliegenden Erfindung ist daher, ein Bindemittel zur wirkungsvollen Reinigung von Ölverschmutzungen oder mit wasserunlöslichen Lösemitteln verschmutzten Gewässern, Flüssen, Seen und Meeren, Sand, Schlamm und Erde zu finden sowie ein Herstellverfahren für ein solches Bindemittel, das eine Öl- oder Lösemittelbindefähigkeit (Adsorptionsfähigkeit) bis zum 100-fachen des Eigengewichtes hat und die Wiederverwertbarkeit (Recycling) sicherzustellen.

Ein besonderer Zweck dieses Bindemittels soll es sein, Ölverschmutzungen selektiv im Eiswasser abtrennen zu können und ein Bindemittel zu entwickeln, das auch bei starkem Wellengang auf Seen oder Meeren zur Ölbindung und damit zu deren umweltfreundlichen Entsorgung verwendet werden kann.

Eine besonders hervorzuhebende Eigenschaft soll die starke Bindefähigkeit des Mittels darstellen, wodurch Verschmutzungen wie Ölabfälle, Lösemittel oder Ähnliches leicht aufgenommen und abgetrennt werden können.

Des weiteren soll das Bindemittel neben Ölen, Altölen und Schwerölen bzw. Benzin und Diesel auch alle hydrophoben Lösemittel aus wässrigen Mischungen abtrennen können.

Zusätzlich soll besonders die Eigenschaft hervorgehoben werden, dass das erfindungsgemäße Bindemittel Öle, Altöle, Schweröle bzw. Benzine und alle hydrophoben Lösemittel auch aus sandigen, schlammigen und erdigen Böden nach einer mechanischen Einarbeitung so abtrennen kann, dass durch die Verklumpungs-und Bindeeigenschaft die Verunreinigungen leicht entfernt werden können.

### Lösung

Sprühprodukte aus Wachsen in Form einer faserig verfilzten Wachswolle, die mit den in der Aufgabenstellung geforderten Adsorberfähigkeiten ausgestattet sind, aus Polyethylenwachs, Polypropylenwachs oder physikalischen bzw. copolymeren Mischungen konnten überraschenderweise gefunden werden, die als Ölbindemittel bzw. als Bindemittel für zahlreiche umweltschädigende aromatische bzw. aliphatischen Lösemittel verwendet werden, wobei insbesondere Öle, Schweröle, Benzine, niedermolekulare verzweigte und unverzweigte Kohlenwasserstoffe (Pentan, Hexan, Heptan, Oktan, Nonan und Decan) und aromatische Ringverbindungen (Benzol, Toluol, Xylene, Mesytilen, Phenol) adsorbiert werden können, wobei sowohl die faserig verfilzte Wachswolle als auch die adsorbierten Stoffe, durch eine Trennung mittels einer Zentrifuge wiederverwendet ( recycelt ) werden können.

Als Rohstoffe für die Verdüsung können folgende Wachse zur Herstellung der Sprühprodukte, die eine faserig verfilzte Wachswolle ergeben, verwendet werden: synthetische Aufbauprodukte, die durch Polymerisation von Ethylen oder Propylen hergestellt werden oder Abbauprodukte, die durch thermischen, katalytischen oder radioaktiven Abbau hergestellt wurden sowie Naturprodukte.

Die als Rohstoffe verwendeten Wachse können ein mittlere Molekulargewichtsverteilung von 200 bis 11.000 g/Mol haben.

Die als Rohstoffe verwendeten oxidierten Wachse haben eine Säurezahl von 0 bis 100 mgKOH/g.

Die verwendeten Wachse für die Herstellung der Sprühprodukte können auch physikalische Mischungen in allen Mischungsverhältnissen der in [0019] bis [0022] genannten Wachse sowie synthetische Copolymer-Mischungen sein.

Die in [0019] bis [0022] genannten Kohlenwasserstoffe können als runde Partikel, als eckige und kantige Partikel und besonders bevorzugt auch als dünne Fäden, die sich zu einer faserig verfilzten Wolle oder zu einer Watte verklumpen, vorliegen.

Unter Ölen versteht diese Erfindung Flüssigkeiten, die sich nicht mit Wasser mischen lassen, wie z. B. Benzin- und Dieselkraftstoffe, ätherische Öle, Mineralöle, Silikonöle, Altöle, Ölabfälle, Ölgemische.

Unter hydrophoben Flüssigkeiten versteht diese Erfindung aprotischunpolare Lösungsmittel (Lösemittel), wie z. B. Alkane, Alkene, Alkine, Benzine, Aromaten mit aliphatischen und aromatischen Substituenten.

Unter Wachsen versteht diese Erfindung die Definition der Wachse der Deutschen Gesellschaft für Fettwissenschaften, die 1957 erstmals veröffentlicht und 1974 neu gefasst wurde.

Definition:
Wachs ist eine technologische Sammelbezeichnung für eine Reihe natürlicher und künstlich gewonnener Stoffe, die folgende Eigenschaften aufweisen:
   - bei 20 °C knetbar,
   - fest bis brüchig hart,
   - grob- bis feinkristallin,
   - durchscheinend bis opak, jedoch nicht glasartig,
   - über 40 °C ohne Zersetzung schmelzend,
   - schon wenig oberhalb des Schmelzpunktes verhältnismäßig niedrigviskos,
   - stark temperaturabhängige Konsistenz und Löslichkeit,
   - unter leichtem Druck polierbar.
Sind in Grenzfällen bei einem Stoff mehr als eine dieser Eigenschaften nicht erfüllt, ist er kein Wachs im Sinne dieser Definition.

Diese aus Wachsen hergestellten Sprühprodukte haben eine extrem niedrige Schüttdichte von bis zu 0,02 g/cm³ und eine Oberfläche bis zu 5 m²/g, daher adsorbieren diese Sprühprodukte, die oben genannten Stoffe, wie z. B. Benzine, Diesel und Altöle bis zur 100-fachen Menge des Eigengewichtes.

Wichtige Anwendungsgebiete sind vorbeugender Wasserschutz, Verhinderung bzw. direkte Aufsaugung von Öl- oder Lösemittelverschmutzung bereits kurz nach der Entstehung der Verschmutzung, Reinigung und Sauberhaltung von Schifffahrtswegen, Reinigung und Sauberhaltung von Ölverschmutzungen, z. B. an Schleusen, Schiffsanlegestellen oder Häfen, vorbeugende Reinigung von Ölabscheidern, Ölabscheidung und Recycling von Ölen in der Filtertechnik, Abscheidung von schwer oder nicht wasserlöslichen Lösemitteln (Chemikalienabscheidung) und deren Recycling in der Filtertechnik, Ölabscheidung in der Abwasserbehandlung und Abwasseraufbereitung, Ölabscheidung und deren Recycling bei der Öl-Naphtha-Gewinnung, Ölabscheidung und Recycling von Altölen/Altstoffen, Ölabscheidung oder Rückgewinnung der Öle bei der Herstellung pflanzlicher Öle und viele Anwendungen in der chemischen Industrie, bei der wasserunlösliche Flüssigkeiten anfallen oder recycelt werden.

Die wichtigste Anwendung ist die Reinigung von ölverseuchten Gewässern, Flüssen, Meeren und deren Stränden. Die faserig verfilzte Wachswolle kann auch bei einem hohen Wellengang auf Seen oder Meeren zur umweltfreundlichen Entsorgung von Ölverschmutzungen verwendet werden. Dabei beeinflusst der Wellengang die Aufnahme der Ölverschmutzung positiv. Durch den intensiven Bewegungsvorgang wird die Ölverschmutzung schneller von der faserig verfilzten Wachswolle aufgenommen.

### Produktionsverfahren für die Herstellung der faserig verfilzten Wachswolle

Zur Herstellung der faserig verfilzten Wachswolle geht man von flüssigen Rohmaterialien aus. Dazu muss das Ausgangsmaterial aufgeschmolzen und in den flüssigen Zustand überführt werden. Die unterschiedlichen Ausgangsmaterialien, die von [0019] bis [0022] beschrieben werden, müssen mindestens 5 °C, besser 20 °C, am besten 50 °C über ihrem Schmelzpunkt oder Tropfpunkt erwärmt werden.

Bei noch höheren Verarbeitungstemperaturen wird die Umformung zur faserig verfilzten Polymerwolle in natürlicher Weise durch den Flammpunkt der jeweils verwendeten Wachse begrenzt.

Dabei muss die Viskosität des für die Herstellung der faserig verfilzten Wachswolle verwendeten Wachses also bei der jeweiligen Verarbeitungstemperatur, bei der die Umformung durchgeführt wird, unter 5.000 mPas, besser unter 1.000 mPas, am Besten unter 500 mPas liegen.

Das geschmolzene dünnflüssige Wachs wird mit handelsüblichen Düsen, Einstoff-, Zweistoff- oder Mehrstoffdruckdüsen, unter Druck zur faserig verfilzten Polymerwolle verdüst. Das Düsenmaterial muss so beschaffen sein, dass sich das Wachs während der Verdüsung nicht abkühlt - bevorzugt sind deshalb beheizbare Düsen, die temperatur- und korrosionsbeständig ausgeführt sein müssen.

Die Verdüsung erfolgt mittels eines Sprühturms oder eines Kühlturms, in den während der Verdüsung des Wachses gleichzeitig Stickstoff, Kohlendioxid oder Luft als Treibgas und zur Kühlung eingeblasen wird. Wenn Luft als Treibgas und Kühlgas verwendet wird, kann auf einen Sprühturm oder Kühlturm verzichtet werden und zum Beispiel auch in eine Halle gesprüht werden.

Der Druck für die Verdüsung des Ausgangsmaterials kann von 1 Bar bis 100 Bar variiert werden. Der Druck des Treibgases (Stickstoff, Kohlendioxid oder Luft) kann ebenfalls von 1 bis 100 Bar variiert werden. Als vorteilhaft hat es sich herausgestellt, wenn der Druck des Treibgases während der Verdüsung höher ist als der Druck des flüssigen Wachses.

Als besonders vorteilhaft hat es sich herausgestellt, wenn der Druck des Treibgases doppelt so hoch ist wie der Druck des flüssigen Wachses. Prinzipiell ist jedoch auch der umgekehrte Fall durchführbar, indem der Druck des Wachses höher ist als der Druck des Treibgases.

Sowohl das flüssige Wachs als auch das Treibgas werden gleichzeitig in separaten Druckdüsen und in dieselbe Richtung in den Sprühturm eingedüst.

Dabei kann die Verdüsung in alle Richtungen erfolgen, in vertikaler, in horizontaler Richtung, aber auch von unten nach oben. Je höher der Druck ist, desto besser sind die Ergebnisse bzw. die Ausbeute der erzeugten faserig verfilzten Wachswolle.

Zur Abkühlung der so hergestellten faserig verfilzten Wachswolle verwendet man in dem Sprüh- oder Kühlturm Stickstoff. Aber auch Kohlendioxid oder Luft kann verwendet werden. Für das Kühlgas verwendet man Temperaturen von minus 180 °C bis plus 100 °C. Bevorzugte Temperaturen sind minus 50 °C bis plus 50 °C.

Zur besseren Temperaturführung kann es vorteilhaft sein, das temperierte Gas (Stickstoff, Kohlendioxid oder Luft) an unterschiedlichen Stellen dem Sprühturm zuzuführen.

Das so hergestellte Endprodukt wird durch den geringen Überdruck von 0 bis 1 Bar im Sprühturm/Kühlturm ausgetragen und in gasdurchlässige Behälter abgefüllt.

Der Erfinder nennt diese Erscheinungsform des so durch eine Verdüsung (Sprühung) hergestellten Produktes eine "faserig verfilzte Wachswolle".

### Beispiele:

1) 100 Gramm eines Sprühproduktes aus Wachs in Form einer faserig verfilzten Wachswolle, hergestellt aus Polyethylenwachs nach dem Fischer-Tropsch-Verfahren mit einer mittleren Molekulargewichtsverteilung von 400 bis 1.000 g/Mol, bindet bei Raumtemperatur 648 Gramm Altöl oder 558 Gramm Dieseltreibstoff.
2) 100 Gramm eines Sprühproduktes aus Wachs in Form einer faserig verfilzten Wachswolle, hergestellt durch Abbau aus Polyethylenabfällen oder Polyethylenkunststoffen mit einer mittleren Molekulargewichtsverteilung von 400 bis 1.000 g/Mol, bindet bei Raumtemperatur 675 Gramm Altöl oder 565 Gramm Xylol.
3) 100 Gramm eines Sprühproduktes aus Wachs in Form einer faserig verfilzten Wachswolle, hergestellt aus Polyethylen nach dem Zieglerverfahren mit einer mittleren Molekulargewichtsverteilung von 400 bis 2.500 g/Mol, bindet bei Raumtemperatur 540 Gramm Hexan.
4) 100 Gramm eines Sprühproduktes aus Wachs in Form einer faserig verfilzten Wachswolle, hergestellt nach dem Metallocenverfahren, mit einer mittleren Molekulargewichtsverteilung von 400 bis 1.000 g/Mol bindet bei Raumtemperatur 510 Gramm Heizöl.

Die faserig verfilzte Wachswolle hergestellt nach den Ansprüchen 6 bis 8 wird als Ölbindemittel verwendet und ist besonderes geeignet als Bindemittel für Altöl, Schweröl, Ölabfälle, Pflanzenöle, tierische Öle, aber auch für Rohöl, so wie es aus der Erde kommt und unter den Meeren exploriert wird, und es kann als Bindemittel für Unterwasser-Einsätze eingesetzt werden, weil es diese Öle oder Rohöle auch unter der Wasseroberfläche binden kann und somit umweltfreundlich aus kontaminierten Gebieten wie zum Beispiel vom Meeresgrund oder Seegrund entfernt werden, oder es kann auch präventiv eingesetzt werden, weil die fasrig verfilzte Wachswolle jahrelang auf dem Wasser schwimmt, sich nicht auflöst und dadurch präventiv zur Verhinderung von Ölkontaminationen vor Biotopen, in Schleusen, in Häfen, an Bohrinseln oder zum Schutz vor Ölverschmutzungen in Binnengewässern beitragen kann und die fasrig verfilzte Wachswolle kann auch bei einem hohen Wellengang auf Seen oder Meeren zur umweltfreundlichen Entsorgung von Öl- und Lösemittelverschmutzungen verwendet werden, weil die Aufnahme der Öl- oder Lösemittelverschmutzungen durch einen intensiven Wellengang positiv beeinflusst wird und je mehr die fasrig verfilzte Wachswolle in einer wasserdurchlässigen Verpackung durch den Wellengang bewegt wird, desto schneller werden die Ölverschmutzungen oder Lösemittelverschmutzungen aufgenommen und da die mit den Verschmutzungen getränkte fasrig verfilzte Wachswolle im Wasser nicht absinkt, also schwimmt, kann die Verpackungseinheit mechanisch aus dem Wasser leicht entfernt werden.

Die faserig verfilzte Wachswolle nach hergestellt nach den Ansprüchen 6 bis 8 wird als Ölbindemittel verwendet und ist besonderes als Bindemittel für alle Kraftstoffe, Benzine, Diesel aber auch für Leichtbenzine oder Flugbenzine und als Bindemittel für ölverschmutzte Sande, Schlamm, Erde, Strände, Sandstrände, in die das Bindemittel jedoch mechanisch eingearbeitet werden muss, von Seen, Meeren oder Flüssen oder zur Reinigung von ölverschmutzten Biotopen, geeignet und es ist besonders geeignet zur Beseitigung von Öl- oder Lösemittelverschmutzungen im Eiswasser oder im Eismeer, dabei kann es sowohl auf der Wasseroberfläche, als auch unter Wasser verwendet werden und als Bindemittel, insbesondere als Bindemittel für öl- oder lösemittelverschmutzte Straßen nach Autounfällen oder sonstigen Unfällen, bei denen wasserunlösliche oder Wasser schwerlösliche Lösemittel ausgelaufen sind, verwendet werden und als Bindemittel für zahlreiche umweltschädigende aliphatische Lösemittel und oberflächenaktive Tenside verwendet werden, wobei insbesondere wasserunlösliche oder schwer lösliche niedermolekulare, verzweigte oder unverzweigte sowie cyclische Kohlenwasserstoffe (z.B. Pentan, n- oder Cyclo-Hexan, n- oder Cyclo- Heptan, -Oktan, -Nonan, -Decan usw.) adsorbiert und somit nach Aufnahme der Schadstoffe diese umweltfreundlich aus kontaminierten Gebäuden, Firmengeländen, Landflächen sowie aus Flüssen, Seen und Meeren entfernt werden.

Wiederverwendung (Recycling): Mittels einer einfachen Zentrifuge kann die nach den Ansprüchen 6 bis 8 hergestellte faserig verfilzte Wachswolle von der Verschmutzung abgetrennt werden, wobei sowohl die faserig verfilzte Wachswolle als auch das damit aufgesogene Öl oder Lösemittel aus der Gruppe Pentan, n- oder Cyclo-Hexan, n- oder Cyclo-Heptan, Oktan, Nonan, Decan, Toluol, Xylol, Mesitylen, Phenol, Dioxine, Aniline, Benzine, Dieselkraftstoffe, Leichtbenzine, Flugbenzine, wiederverwendet werden können.

## Patentansprüche

1. Ölbindemittel und Bindemittel für Lösemittel aus der Gruppe Pentan, n-oder Cyclo-Hexan, n- oder Cyclo-Heptan, Oktan, Nonan, Decan, Toluol, Xylol, Mesitylen, Phenol, Dioxine, Aniline, Benzine, Dieselkraftstoffe, Leichtbenzine, Flugbenzine, auf Wachsbasis **dadurch gekennzeichnet, dass** man Wachse aus der Gruppe der synthetischen Wachse, der pflanzlichen Wachse, der Abbauwachse oder Naturwachse aus der Schmelze im Schmelzspinnverfahren verdüst und zu einer faserig verfilzten Wachswolle ablegt.

2. Ölbindemittel und Bindemittel für Lösemittel nach Anspruch 1 **dadurch gekennzeichnet, dass** die verwendeten Wachse durch Polymerisation von Ethylen oder Propylen hergestellte synthetische Aufauprodukte, durch thermischen katalytischen oder radioaktiven Abbau hergestellte Abbauprodukte oder Naturwachse sind.

3. Ölbindemittel und Bindemittel für Lösemittel nach Anspruch 1 und 2 **dadurch gekennzeichnet, dass** die verwendeten Wachse nach dem Ziegler-Natta-Prozess hergestellte synthetische Polyethylen- oder Polypropylenwachse, nach dem Fischer-Tropsch-Prozess hergestellte synthetische Polyethylen- oder Polypropylenwachse, nach dem Metallocen-Prozess hergestellte synthetische Polyethylen- oder Polypropylenwachse, durch thermischen, katalytischen oder radioaktiven Abbau hergestellte synthetische Polyethylen- oder Polypropylenwachse, bei der Herstellung von Polyolefinen als niedermolekulare wachsartige Abfälle anfallende synthetische Wachse, nach dem Hochdruckverfahren aus Alpha-Olefin hergestellte synthetische Wachse, Mischungen der genannten Wachse, die bis zu 25 % Ethylvinylacetat (EVA) enthalten, mikrokristalline Wachse, Naturwachse wie aus der Gruppe Montanwachse, Carnaubawachse, Bienenwachse oder Candelillawachse, oxidierte Wachse mit einer Säurezahl von 0 bis 100 mgKOH/g, sowie physikalische und copolymere Mischungen der hier aufgelisteten Wachse sind.

4. Ölbindemittel und Bindemittel für Lösemittel nach den Ansprüchen 1 bis 3 **dadurch gekennzeichnet, dass** die Wachse ein mittleres Molekulargewicht von 200 bis 11.000 g/Mol haben.

5. Ölbindemittel und Bindemittel für Lösemittel nach Anspruch 1 bis 4 **dadurch gekennzeichnet, dass** die Fasern oder Filamente nur wenige Millimeter bis zu mehreren Metern lang sind, die einzelnen Fasern oder Filamente einen Durchmesser von 50 nm bis zu einigen Millimetern haben und diese Fasern ineinander verschlungen und zu größeren Bündeln zusammengelagert sind, die selbst verschlungen und auch verknotet sind, wodurch die faserige verfilzte Wachswolle zusammen gehalten wird.

6. Verfahren zur Herstellung des Öl- und Lösemittelbindemittels nach Anspruch 1 und 5 **dadurch gekennzeichnet, dass** diese Wachse aus der Wachsschmelze mit einem Treibgas zu einer faserig verfilzten Wachswolle verdüst und zu einer faserig verfilzten Wachswolle abgelegt werden.

7. Verfahren nach Anspruch 6 **dadurch gekennzeichnet, dass** die Verdüsungstemperatur mindestens 5 °C, besser 20 °C, am besten 50 °C über dem Schmelzpunkt der verwendeten Wachse, die Viskosität der verwendeten Wachse bei Verdüsungstemperatur unter 5.000 mPas, besser unter 1.000 mPas, am besten unter 500 mPas und der Druck für die Verdüsung des Wachses von 1 bis 100 Bar liegt.

8. Verfahren nach Anspruch 6 **dadurch gekennzeichnet, dass** der Druck des Treibgases höher ist als der Druck mit dem das Wachs versprüht wird, am geeignetsten ist der Druck doppelt so hoch wie der Druck mit dem das Wachs versprüht wird.

9. Verwendung der nach den Ansprüchen 6 bis 8 hergestellten faserig verfilzten Wachswolle als Ölbindemittel und Bindemittel für Lösemittel für Landanwendungen und für Anwendungen in Gewässern.

10. Verwendung der nach den Ansprüchen 6 bis 8 hergestellten faserig verfilzten Wachswolle als Ölbindemittel , als Bindemittel für Altöl, Schweröl, Ölabfälle, Pflanzenöle, tierische Öle, aber auch für Rohöl, so wie es aus der Erde kommt und unter den Meeren exploriert wird sowie als Bindemittel für Unterwasser-Einsätze, weil es diese Öle oder Rohöle auch unter der Wasseroberfläche binden kann und somit umweltfreundlich aus kontaminierten Gebieten wie zum Beispiel vom Meeresgrund oder Seegrund entfernt werden kann, sowie präventive Verwendung als Bindemittel, weil die faserig verfilzte Wachswolle jahrelang auf dem Wasser schwimmt, sich nicht auflöst und dadurch präventiv zur Verhinderung von Ölkontaminationen vor Biotopen, in Schleusen, in Häfen, an Bohrinseln oder zum Schutz vor Ölverschmutzungen in Binnengewässern beitragen kann sowie Verwendung der faserig verfilzten Wachswolle auch bei einem hohen Wellengang auf Seen oder Meeren zur umweltfreundlichen Entsorgung von Öl- und Lösemittelverschmutzungen, weil die Aufnahme der Öl- oder Lösemittelverschmutzungen durch einen intensiven Wellengang positiv beeinflusst wird sowie Verwendung, indem die faserig verfilzte Wachswolle in einer wasserdurchlässigen Verpackung durch den Wellengang bewegt wird, wobei die Ölverschmutzungen oder Lösemittelverschmutzungen aufgenommen werden und die mit den Verschmutzungen getränkte faserig verfilzte Wachswolle im Wasser nicht absinkt, also schwimmt, so dass die Verpackungseinheit mechanisch aus dem Wasser leicht entfernt werden kann.

11. Verwendung der faserig verfilzten Wachswolle, hergestellt nach den Ansprüchen 6 bis 8 als Ölbindemittel, besonderes als Bindemittel für alle Kraftstoffe, Benzine, Diesel aber auch für Leichtbenzine oder Flugbenzine und als Bindemittel für ölverschmutzte Sande, Schlamm, Erde, Strände, Sandstrände, in die das Bindemittel jedoch mechanisch eingearbeitet werden muss, von Seen, Meeren oder Flüssen oder zur Reinigung von ölverschmutzten Biotopen, insbesondere zur Beseitigung von Öl- oder Lösemittelverschmutzungen im Eiswasser oder im Eismeer, wobei es sowohl auf der Wasseroberfläche, als auch unter Wasser verwendet werden kann und Verwendung als Bindemittel, insbesondere als Bindemittel für öl- oder lösemittelverschmutzte Straßen nach Autounfällen oder sonstigen Unfällen, bei denen wasserunlösliche oder Wasser schwerlösliche Lösemittel ausgelaufen sind, sowie Verwendung als Bindemittel für zahlreiche umweltschädigende aliphatische Lösemittel und oberflächenaktive Tenside, wobei insbesondere wasserunlösliche oder schwer lösliche niedermolekulare, verzweigte oder unverzweigte sowie cyclische Kohlenwasserstoffe (z.B. Pentan, n- oder Cyclo-Hexan, n- oder Cyclo- Heptan, -Oktan, -Nonan, -Decan usw.) adsorbiert und somit nach Aufnahme der Schadstoffe diese umweltfreundlich aus kontaminierten Gebäuden, Firmengeländen, Landflächen sowie aus Flüssen, Seen und Meeren entfernt werden.

12. Wiederverwendung oder Recycling der nach den Ansprüchen 6 bis 8 hergestellten faserig verfilzten Wachswolle indem mittels einer einfachen Zentrifuge die nach den Ansprüchen 6 bis 8 hergestellte faserig verfilzte Wachswolle von der Verschmutzung abgetrennt werden kann, wobei sowohl die faserig verfilzte Wachswolle als auch das damit aufgesogene Öl oder Lösemittel aus der Gruppe Pentan, n- oder Cyclo-Hexan, n- oder Cyclo-Heptan, Oktan, Nonan, Decan, Toluol, Xylol, Mesitylen, Phenol, Dioxine, Aniline, Benzine, Dieselkraftstoffe, Leichtbenzine, Flugbenzine, wiederverwendet werden können.

## Claims

1. Oil binding agents and binding agents for solvents from the group of pentane, n-or cyclo-hexane, n- or cyclo-heptane, octane, nonane, decane, toluene, xylene, mesitylene, phenol, dioxines, anilines, petrols, diesel fuels, light petrols, aviation petrols on wax base, **characterized in that** waxes from the group of synthetic waxes, vegetable waxes, decomposing waxes or natural waxes from the melt in the melt spinning process are atomized and laid to form a fibrously felted waxy wool.

2. Oil binding agents and binding agents for solvents in accordance with claim 1, **characterized in that** the waxes used are synthetic build-up products created by polymerization of ethylene or propylene, decomposition products created by thermal, catalytic or radioactive decomposition or natural waxes.

3. Oil binding agents and binding agents for solvents in accordance with claims 1 and 2, **characterized in that** the waxes used are synthetic polyethylene or polypropylene waxes produced according to the Ziegler-Natta process, synthetic polyethylene or polypropylene waxes produced according to the Fischer-Tropsch process, synthetic polyethylene or polypropylene waxes produced according to the metallocene process, synthetic polyethylene or polypropylene waxes produced by thermal, catalytic or radioactive decomposition, synthetic waxes generated as low-molecular, wax-like waste during the production of polyolefines, synthetic waxes produced from alpha-olefin by the high-pressure process, mixtures of the specified waxes with an ethyl vinyl acetate (EVA) content of up to 25%, microcrystalline waxes, natural waxes such as from the group of montan waxes, carnauba waxes, beeswaxes or candelilla waxes, oxidized waxes with an acid number of 0 to 100 mgKOH/g, as well as physical and copolymer mixtures of the waxes listed herein.

4. Oil binding agents and binding agents for solvents in accordance with claims 1 to 3, **characterized in that** the waxes have a medium molecular weight of 200 to 11,000 g/mol.

5. Oil binding agents and binding agents for solvents in accordance with claims 1 to 4, **characterized in that** the fibres or filaments are only a few millimetres up to several metres long, the individual fibres or filaments have a diameter of 50 nm up to several millimetres and that these fibres have become entwined and been bundled up into larger units which have themselves become entwined and knotted such that the fibrously felted waxy wool is held together.

6. Method for the production of the oil and solvent binding agent in accordance with claims 1 and 5, **characterized in that** these waxes from the wax melt are atomized into a fibrously felted waxy wool by means of a blowing agent and laid to form a fibrously felted waxy wool.

7. Method in accordance with claim 6, **characterized in that** the atomizing temperature is at least 5°C, better 20°C, best 50°C above the melting point of the used waxes, the viscosity of the used waxes is below 5,000 mPas, better below 1,000 mPas, best below 500 mPas and the pressure for atomizing the wax is between 1 and 100 bar.

8. Method in accordance with claim 6, **characterized in that** the pressure of the blowing agent is higher than the pressure at which the wax is sprayed, the most appropriate pressure is twice as high as the pressure at which the wax is sprayed.

9. Use of the fibrously felted waxy wool produced in accordance with claims 6 to 8 as an oil binding agent and binding agent for solvents for land and water applications.

10. Use of the fibrously felted waxy wool produced in accordance with claims 6 to 8 as an oil binding agent, as a binding agent for used oil, heavy oil, oil waste, vegetable oils, animal oils, but also for crude oil as it comes out of the ground and as being explored under the oceans, and as a binding agent for underwater applications because it can bind these oils or crude oils beneath the water surface and thus remove them from contaminated areas such as the bottom of oceans or lakes in an environmentally friendly way, as well as the preventive use as a binding agent, because the fibrously felted waxy wool floats on the water for years without dissolving, thus preventing oil contamination in front of biotopes, in locks, in harbours, at oil rigs, or contributing to prevent oil contamination in inland waters, and the use of the fibrously felted waxy wool even in a heavy swell on lakes or oceans for the environmentally friendly disposal of oil and solvent contaminants due to the fact that the absorption of oil or solvent contaminants is positively influenced by an intensive swell, the swell moving the fibrously felted waxy wool in a water-permeable package, absorbing the oil or solvent contaminants, while the fibrously felted waxy wool soaked in the contaminants does not sink but floats in the water such that the package unit can easily be removed from the water by mechanical means.

11. Use of the fibrously felted waxy wool, produced in accordance with claims 6 to 8, as an oil binding agent, in particular as a binding agent for all fuels, petrols, diesel but also for light or aviation petrols, and as a binding agent for oil-contaminated sands, mud, soil, beaches, sandy beaches, into which the binding agent must, however, be mechanically incorporated, of lakes, oceans or rivers, or for the cleaning of oil-contaminated biotopes, especially for the removal of oil or solvent contamination in iced water or the Polar Sea, where it can be used both on the water surface and under water, and use as a binding agent, in particular as a binding agent for roads contaminated by oil or solvent after car or other accidents where solvents insoluble or slightly soluble in water have run out, and use as a binding agent for a large number of ecologically harmful aliph-atic solvents and surface-active tensides, in particular low-molecular, branched or linear as well as cyclic hydrocarbons insoluble or slightly soluble in water (e.g. pentane, n- or cyclo-hexane, n- or cyclo-heptane, -octane, -nonane, -decane etc.) being adsorbed, thus removing the harmful substances, after their absorption, from contaminated buildings, company sites, land areas and from rivers, lakes and oceans.

12. Reuse or recycling of the fibrously felted waxy wool produced in accordance with claims 6 to 8 by separating the fibrously felted waxy wool produced in accordance with claims 6 to 8 from the contaminants, both the fibrously felted waxy wool and the oil or solvent from the group of pentane, n- or cyclo-hexane, n- or cyclo-heptane, octane, nonane, decane, toluene, xylene, mesitylene, phenol, dioxines, anilines, petrols, diesel fuels, light petrols, aviation petrols absorbed thereby being reusable.

## Revendications

1. Liants d'huile et de solvants des groupes pentane, n- ou cyclo-hexane, n- ou cyclo-heptane, octane, nonane, décan, toluène, xylène, mésitylène, phénol, dioxines, aniline, essences, diesel, essences, légères, kérosène, à base de cire **caractérisés par le fait que** l'on atomise les cires du groupé des cires synthétiques, des cires végétales, des cires de dégradation ou des cires naturelles à partir de la fonte obtenue par procédé de filage à chaud puis qu'on les dépose sur un tapis pour former un voilé de laine de polymère fibreuse emmêlée.

2. Liants d'huile et de solvants selon la revendication 1 **caractérisés par le fait que** les cires utilisées sont des produits synthétiques de synthèse produits par polymérisation de l'éthylène ou du propylène ou des produits de dégradation produits par décomposition thermo-catalytique ou désintégration radioactive, ou des cires naturelles.

3. Liants d'huile et de solvants selon les revendications 1 et 2 **caractérisés par le fait que** les cires utilisées sont des cires de polyéthylène ou de polypropylène produites synthétiquement selon le procédé de Ziegler-Natta, des cires de polyéthylène ou de polypropylène produites synthétiquement selon le procédé de Fischer-Tropsch, des cires de polyéthylène ou de polypropylène produites synthétiquement selon le procédé des métallocènes, des cires de polyéthylène ou de polypropylène produites synthétiquement par décomposition thermique, dégradation catalytique ou désintégration radioactive, des cires produites synthétiquement comme déchets cireux de faible poids moléculaire lors de la production de poly-oléfines, des cires produites synthétiquement selon le procédé à haute pression à partir d'alpha-oléfine, des mélanges de cires citées ici, qui peuvent contenir jusqu'à 25% d'éthylène-acétate de vinyle (EVA), ou des cires microcristallines, ou des cires naturelles du groupe des cires de lignite, des cires de carnauba, des cires d'abeilles ou des cires de candelilla, ou dés cires oxydées, qui ont un indice d'acidité compris entre 0 et 100 mg KOH/g, ainsi que des mélanges physiques et de co-polymères des cires listées ici.

4. Liants d'huile et de solvants selon les revendications 1 à 3 **caractérisés par le fait que** les cires ont une distribution de poids moléculaire moyenne allant de 200 à 11 000 g/mol.

5. Liants d'huile et de solvants selon les revendications 1 à 4 **caractérisés par le fait que** les fibres ou filaments sont seulement de quelques millimètres jusqu'à plusieurs mètres de long, que chaque fibre ou filament a un diamètre de 50 nm jusqu'à plusieurs millimètres et que ces fibres sont entrelacées les unes dans les autres (emmêlées) et condensées en de plus grands faisceaux, qui sont eux-mêmes entrelacés et noués, ce qui confère à la laine de cire fibreuse emmêlée sa cohérence.

6. Procédé de fabrication de liants d'huile et de solvants selon les revendications 1 et 5 **caractérisés par le fait que** ces cires sont atomisées à partir de la cire fondue grâce au gaz propulseur en une laine de cire fibreuse emmêlée et déposées sur un tapis pour former un voile de laine de cire fibreuse emmêlée.

7. Procédé selon la revendication 6 **caractérisé par le fait que** la température d'atomisation se situe au moins 5°C (de préférence 20°C ou de manière idéale 50°C) au-delà du point de fusion des cires utilisées, la viscosité des cires utilisées se situe en dessous de 5 000 mPas (au mieux en dessous de 1 000 mPas et dans le cas idéal en dessous de 500 mPas) et la pression d'atomisation dé la cire se situe entre 1 et 100 bars.

8. Procédé selon la revendication 6 **caractérisé par le fait que** la pression du gaz propulseur est supérieure à la pression avec laquelle la cire est pulvérisée, de préférence, la pression du gaz propulseur est deux fois plus élevée que la pression avec laquelle la cire est pulvérisée.

9. Utilisation de la laine de cire fibreuse emmêlée fabriquée selon les revendications 6 à 8 en tant que liant d'huile et de solvants pour des applications terrestres et dans les eaux.

10. La laine de cire fibreuse emmêlée fabriquée selon les revendications 6 à 8 est utilisée comme liant d'huile et est spécialement appropriée comme liant pour les huiles usées, huiles lourdes, déchets huileux, huiles végétales, huiles animales, mais aussi pour le pétrole brut, tel qu'il sort de la terre et est exploré sous les mers, et elle peut être utilisée comme liant pour des opérations sous-marines, car elle peut lier ces huiles ou le pétrole brut au-dessous de la surface de l'eau et donc être éliminée de manière écologique des zones contaminées, telles que par exemple, les fonds marins ou lacustres, ou elle peut être également utilisée de manière préventive, car la laine de cire fibreuse emmêlée flotte durant des années sur l'eau, ne se dissout pas, et peut donc être utilisée pour contribuer à éviter la contamination par de l'huile de biotopes, dans des écluses, des ports, sur des plates-formes pétrolières ou pour la protection contre des mazoutages dans les eaux intérieures et la laine de cire fibreuse emmêlée peut également être utilisée même en cas de forte houle sur les lacs ou les mers en vue d'une élimination respectueuse de l'environnement de la contamination par de l'huile ou des solvants, parce que l'absorption de la pollution par du pétrole ou un solvant est positivement influencée par les fortes vagues, et plus la laine de cire fibreuse emmêlée dans un emballage perméable à l'eau est bougée par les vagues, plus vite les marées noires ou les pollutions par des solvants sont absorbées, et puisque la laine de cire fibreuse emmêlée imprégnée d'agents de pollution ne coule pas, mais nage à la surface de l'eau, l'unité de conditionnement peut facilement être enlevée mécaniquement hors de l'eau.

11. La laine dé cire fibreuse emmêlée fabriquée selon les revendications 6 à 8 est utilisée comme liant d'huile et est particulièrement appropriée en tant que liant pour tous les carburants, essences, diesel, mais aussi pour les essences légères ou le kérosène, et comme liant pour les sables, la boue, la terre, les plages, les plages de sable mazoutés, dans lequel le liant doit cependant être incorporé mécaniquement ; elle est appropriée au nettoyage des lacs, mers ou fleuves ou pour le nettoyage des biotopes mazoutés et elle est particulièrement adaptée pour éliminer les contaminations par de l'huile ou un solvant dans l'eau glacée ou dans la mer polaire. Ce faisant, elle peut aussi bien être utilisée sur la surface de l'eau que sous l'eau, et comme liant, en particulier comme liant pour les routes mazoutées ou contaminées par des solvants après un accident de la route ou autre, au cours duquel des solvants insolubles ou peu solubles dans l'eau se sont répandus. Et elle peut être utilisée comme liant pour absorber de nombreux solvants aliphatiques et agents tensioactifs nocifs pour l'environnement, en particulier des hydrocarbures à faible poids moléculaire ramifiés et non ramifiés, insolubles ou peu solubles dans l'eau, ainsi que des hydrocarbures cycliques (par ex. pentane, n- ou cyclo-hexane, n- ou cyclo-heptane, n- ou cyclo-octane, n- ou cyclo-nonane, n- ou cyclo-décane, etc.), et donc après absorption des agents polluants, permettre leur élimination écologique hors de bâtiments, sites d'entreprises, terrains, ainsi que rivières, lacs et mers contaminés.

12. Réutilisation (recyclage) : Grâce à une simple centrifugeuse, la laine de cire fibreuse emmêlée fabriquée selon les revendications 6 à 8 peut être séparée de l'agent polluant. Ce faisant, la laine de cire fibreuse emmêlée, tout comme l'huile ou le solvant absorbé du groupe pentane, n- ou cyclo-hexane, n- cyclo-heptane, octane, nonane, décane, toluène, xylène, mésitylène, phénol dioxines, aniline, essences, carburants diesel, essences légères, kérosène, peuvent être réutilisés.
